# EUROPEAN PATENT APPLICATION

(11) **EP 1 227 262 A1**
(43) Date of publication of application: **31.07.2002**
(21) Application number: 02250623.2
(22) Date of filing: 30.01.2002
(51) Int. Cl.: F16D 69/02

(54) **Non-asbestos friction material**

(30) Priority: 30.01.2001 JP 2001022104
(71) Applicant: NISSHINBO INDUSTRIES, INC., Chuo-ku, Tokyo 103 (JP)
(72) Inventor: Takeuchi, Kazuhiro,c/o Tatebayashi Plant, Oura-machi, Gunma-ken (JP); Nagata, Takeo, c/o Tatebayashi Plant, Oura-machi, Gunma-ken (JP); Tsugawa, Kazuo, c/o Tatebayashi Plant, Oura-machi, Gunma-ken (JP)
(74) Representative: Stuart, Ian Alexander

(57) **Abstract**

A non-asbestos friction material is made by molding and curing a composition comprising a fibrous base, a filler, a binder, and tin and/or tin sulfide and exhibits excellent wear resistance and less metal pickup at high temperatures.

## Description

The present invention relates to a non-asbestos friction material. Preferred embodiments are well suited for use as friction material in brakes for automobiles and other equipment because of excellent wear resistance and kindness to the mating surface (i.e., rotor kindness and drum kindness) at high temperatures.

### Prior Art

Non-asbestos friction materials used as brake linings in drum brakes and as disk pads in disk brakes for automobiles and other equipment include substances such as graphite and molybdenum disulfide to improve wear resistance. Moreover, they often include an antimony compound such as antimony oxide or antimony sulfide to prevent the exacerbation of mating surface attack by metal pickup that arises at high temperatures. Such antimony compounds are also effective for imparting high-temperature wear resistance.

However, efforts are increasingly being made to suppress the use of antimony compounds on account of environmental concerns. A need thus exists for a way to reliably achieve high-temperature wear resistance and kindness to the mating surface without resorting to the use of antimony compounds.

### SUMMARY OF THE INVENTION

It is therefore desirable to provide non-asbestos friction materials which preferably have an excellent high-temperature wear resistance and an excellent mating surface kindness (i.e., rotor kindness and drum kindness) but contain no antimony compounds.

We have discovered that the incorporation of tin and/or a tin sulfide (e.g., SnS, SnS₂) in a non-asbestos friction material-forming composition enables a non-asbestos friction material to be obtained which, at elevated temperatures of 200°C or more, has an excellent wear resistance and less metal pickup and good mating surface kindness without requiring the use of an antimony compound.

Accordingly, the invention provides a non-asbestos friction material made by molding and curing a composition comprising primarily a fibrous base, a filler, a binder, and tin and/or tin sulfide.

### DETAILED DESCRIPTION OF THE INVENTION

The friction material composition used to form the non-asbestos friction material of the invention includes one or more additives from among tin and tin sulfides such as SnS and SnS₂. The presence of tin or tin sulfide may serve to impart the desired effects described above. The tin and tin sulfide preferably have an average particle size of up to 100 µm, and espcially 1 to 50 µm. The tin and tin sulfides are included in the friction material composition in a total amount of preferably 0.1 to 15 vol%, and especially 0.5 to 10 vol%, based on the overall composition.

It is also desirable to include graphite in the composition. The graphite may be any known graphite commonly used in friction materials. That is, the graphite may be a naturally occurring or synthetic graphite, and may be in any form, such as flakes, needles or spheres. The graphite has an average particle size of preferably 50 to 1,000 µm, and especially 50 to 500 µm.

The graphite is added in a suitably selected amount which is preferably at least 2 vol%, more preferably 3 to 12 vol%, and most preferably 4 to 10 vol%, based on the overall friction material composition.

Addition of the graphite in a form having a small particle size, i.e., an average particle size of less than 50 µm, and preferably 30 µm or less and in a proportion relative to the tin and/or tin sulfide of at least 1 vol%, and especially 3 to 10 vol%, is beneficial for more advantageously achieving the desired wear resistance and kindness to mating surfaces.

The other components of the friction material composition may be components used in friction materials already known to the art.

Specifically, the fibrous base may be any organic fiber or inorganic fiber other than asbestos which is commonly used in friction materials. Illustrative examples include inorganic fibers such as metal fibers (e.g., iron, copper, brass, bronze, and aluminum), glass fibers, carbon fibers, rock wool, wollastonite, sepiolite, and attapulgite; and organic fibers such as aramid fibers, polyimide fibers, polyamide fibers, phenolic fibers, cellulose, and acrylic fibers. Any one or combination of two or more of these may be used.

The fibrous base may be used in the form of either short fibers or a powder. It is added in an amount of preferably 5 to 30 vol%, and most preferably 10 to 20 vol%, based on the overall friction material composition.

Known organic or inorganic fillers commonly used in friction materials may be employed as fillers in the friction materials of the invention. Illustrative examples include molybdenum disulfide, calcium carbonate, precipitated calcium carbonate, barium sulfate, magnesium oxide, calcium hydroxide, calcium fluoride, slaked lime, talc, molybdenum trioxide, zirconium silicate, iron oxide, mica, iron sulfide, zirconium oxide, metal powder, silicon dioxide, alumina, vermiculite, ground tire rubber, rubber dust (rubber powder and granules), nitrile rubber dust (vulcanized product), acrylic rubber dust (vulcanized product), and cashew dust. These may be used alone or as combinations of two or more thereof.

The amount of such fillers is preferably 25 to 85 vol%, and especially 45 to 70 vol%, based on the overall friction material composition.

The binder may be any known binder commonly used in friction materials. Illustrative examples include phenolic resins, various rubber-modified phenolic resins such as high-ortho phenolic resins modified with acrylonitrile-butadiene rubber (NBR), NBR-modified phenolic resins and acrylic rubber-modified phenolic resins, and also melamine resins, epoxy resins, NBR, nitrile rubber and acrylic rubber. Any one or combinations of two or more of these may be used. The binder is included in a total amount which is preferably 5 to 30 vol%, more preferably 7 to 27 vol%, and most preferably 10 to 25 vol%, based on the overall amount of the friction material composition. If the overall amount of binder added is too large, the organic component content within the friction material becomes excessive, which may lower the heat resistance.

The method of making the friction material of the invention generally involves uniformly blending predetermined amounts of the above-described components in a suitable mixer such as a Henschel mixer, Loedige mixer or Eirich mixer, and preforming the blend in a mold. The preform is then molded at a temperature of 130 to 200°C and a pressure of 100 to 1,000 kg/cm² for a period of 2 to 15 minutes. The resulting molded article is typically postcured by heat treatment at 140 to 250°C for 2 to 48 hours, then spray-painted, baked and surface-ground as needed to give the finished article.

In the case of automotive disk pads, production may be carried out by placing the preform on an iron or aluminum plate that has been pre-cleaned, surface treated and coated with an adhesive, molding the preform in this state within a mold, and subsequently heat-treating, spray-painting, baking and surface-grinding.

The non-asbestos friction materials of the invention can be used in disk brakes and drum brakes, and are highly suitable for a variety of related applications, including disk pads, brake shoes and brake linings in automobiles, large trucks, railroad cars and various types of industrial machinery. They are particularly well-suited to use as brake linings in drum brakes.

### EXAMPLES

Examples and comparative examples are given below by way of illustration, and are not intended to limit the invention.

### Examples 1 to 8, and Comparative Examples 1 to 4

The components shown in Table 1 were uniformly blended in a Loedige mixer and preformed in a pressure mold under a pressure of 100 kg/cm² for 1 minute. Each preform was molded for the desired length of time at a temperature and pressure of 160°C and 250 kg/cm², then postcured by 5 hours of heat treatment at 200°C, yielding friction materials in each of Examples 1 to 8 and Comparative Examples 1 to 4.

The amount of wear and metal pickup for each of the friction materials thus obtained were measured by the methods described below. The results are presented in Table 1.

### Wear Test (according to JASO C406)

The amount of wear in the friction material was measured under the following test conditions: initial braking speed, 50 km/h; braking deceleration, 0.3 G; suitable number of braking cycles; brake temperature before braking, 100°C, 200°C, 300°C or 400°C. The amount of wear actually measured was converted into the amount of wear per 1,000 braking cycles. This latter value is shown in the tables below.

### Metal Pickup

Metal pickup by the friction material was examined during measurement of the amount of wear at the various temperatures in the wear tests, and rated according to the following criteria.
Very Good: No metal fragments were picked up by friction material
Good: At most several small metal fragments up to 3 mm in major diameter were picked up
Fair: Numerous small metal fragments were picked up
Poor: Large metal fragments at least 5 mm in major diameter were picked up

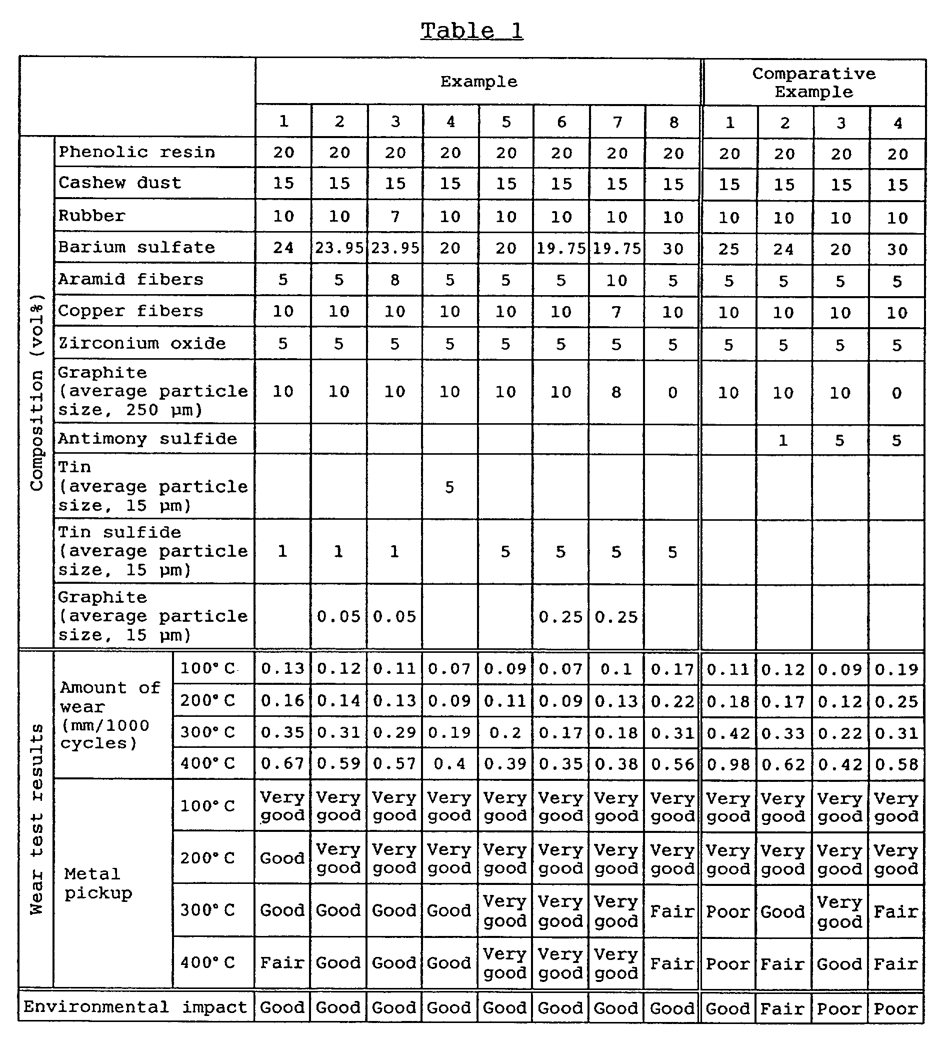

As is apparent from the above results, the non-asbestos friction materials embodying the invention exhibit excellent wear resistance and less metal pickup or excellent mating surface kindness (i.e., rotor kindness and drum kindness) at high temperatures.

Japanese Patent Application No. 2001-022104 is incorporated herein by reference.

Although some preferred embodiments have been described, many modifications and variations may be made thereto in light of the above teachings. It is therefore to be understood that the invention may be practiced otherwise than as specifically described without departing from the scope of the appended claims.

## Claims

1. A non-asbestos friction material made by molding and curing a composition comprising a fibrous base, a filler and a binder, the composition further comprising tin, tin sulfide, or a combination of tin and tin sulfide.

2. The non-asbestos friction material of claim 1, wherein the tin, tin sulfide, or combination of tin and tin sulfide is included in an amount of 0.1 to 15 vol%, based on the overall composition.

3. The non-asbestos friction material of claim 1 or claim 2 wherein the composition further comprises graphite.

4. A brake lining or disk brake pad comprising a material according to any preceding claim.
